# EUROPEAN PATENT SPECIFICATION

(11) **EP 0 675 161 B1**
(45) Date of publication and mention of the grant of the patent: **13.05.1998**
(21) Application number: 95302025.2
(22) Date of filing: 27.03.1995
(51) Int. Cl.: C08L 7/00, C08L 9/00, B60C 9/20

(54) **Rubber composition for a steel belt of a tyre**
Kautschukmischung für Stahlbänder von Luftreifen
Composition de caoutchouc pour bande d'acier de pneumatique

(30) Priority: 28.03.1994 JP 57485/94
(43) Date of publication of application: 04.10.1995
(73) Proprietor: Sumitomo Rubber Industries Ltd., Kobe-shi, Hyogo 651 (JP)
(72) Inventor: Nakada, Yoko, Kobe-shi, Hyogo (JP); Fukumoto, Takahiro, Kobe-shi, Hyogo (JP); Muraoka, Kiyoshige, Kobe-shi, Hyogo (JP)
(74) Representative: Stewart, Charles Geoffrey

(56) References cited:
- DE-A- 4 118 180

## Description

The present invention relates to rubber compositions for a steel belt of a tyre for a vehicle and, more particularly, to rubber compositions for steel belts which satisfy requirements for improved steering stability and reduced rolling resistance.

With the recent performance improvement of vehicles, one performance requirement of tyres is to provide improved steering stability. One method that meets such requirement is to increase the hysteresis loss of the tread rubber to improve the gripping force against the road surface. However, tread rubber compositions having a greater hysteresis loss tend to deteriorate the rolling resistance of a tyre.

A tyre includes a belt 3 (or breaker) having a width nearly equal to a tread width and interposed between a carcass portion 2 and a tread portion 1. The belt 3 serves to radially compress the entire tyre as well as to maintain the circumferential rigidity of the tyre. Therefore, the steering stability can be ensured by employing less stretchable and highly rigid belt 3.

It is, therefore, an object of the present invention to provide a rubber composition for a steel belt which can provide improved steering stability and rolling resistance.

The inventors of the present invention have found that requirements for improved steering stability and for reduced rolling resistance can both be satisfied by improving the rubber composition which is to be disposed around a belt made of steel (hereinafter referred to as "rubber for steel belt"), and hence attained the present invention.

According to the present invention a rubber composition for a steel belt comprises: 100 parts by weight of a diene rubber containing at least either one of natural rubber and polyisoprene as a main component thereof; 60 to 90 parts by weight of a carbon black having an iodine adsorption of 50 to 100 mg/g and a dibutylphthalate absorption of 100 to 160 ml/100g; 5 to 6 parts by weight of sulfur; 1.5 to 3 parts by weight of a sulfenamide-based vulcanisation accelerator; 2 to 5 parts by weight of a modified methylolmelamine resin; and 2 to 5 parts by weight of a modified resorcinolformaldehyde.

Various other objects, features and attendant advantages of the present invention will be more fully appreciated as the same becomes better understood from the following detailed description in conjunction with the attached drawing in which:

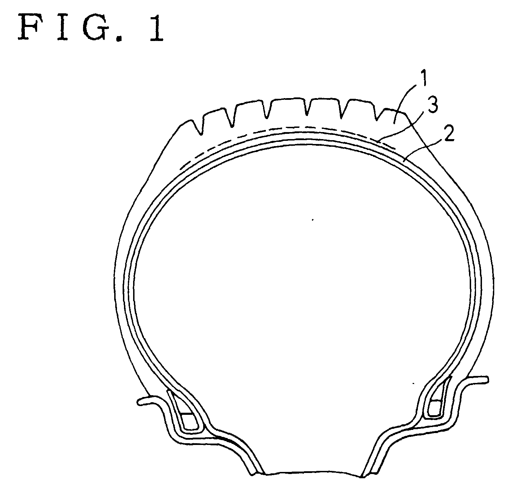

Figure 1 is a sectional view of a tyre.

A carbon black to be blended in the rubber composition of the present invention has an iodine adsorption of 50 to 100 mg/g and a dibutylphthalate absorption (hereinafter referred to as "DBP absorption") of 100 to 160 ml/100g. A carbon black having an iodine adsorption of less than 50 mg/g is not used, because such carbon black reduces the elasticity modulus of the rubber composition and hence deteriorates steering stability of the tyre. A carbon black having an iodine adsorption of greater than 100 mg/g is also not used, because such carbon black deteriorates the workability and dispersibility on kneading or mixing the- rubber composition, and results in a loss tangent of the rubber composition so high that the rolling resistance of the tyre is poor. A DBP absorption of less than 100 ml/100g results in a rubber composition naving a low elasticity modulus so that the steering stability cannot be sufficiently improved. On the other hand, a DBP absorption of greater than 160 ml/100g results in a rubber composition having an excessively high elasticity so that the durability of the tyre is deteriorated. In addition, the loss tangent of such rubber composition is so high that the rolling resistance of the tyre is degraded. Therefore a DBP absorption of less than 100 ml/100g or greater than 160 ml/100g is not used.

The blending ratio of the carbon black having the aforesaid properties is 60 to 90 parts by weight relative to 100 parts by weight of the rubber component. If the blending ratio is less than 60 phr, the elasticity modulus of the rubber composition is too low to sufficiently improve the steering stability. On the other hand, if the blending ratio is greater than 90 phr, the elasticity modulus of the rubber composition is so high that the steering stability is deteriorated. In addition, the loss tangent of the rubber composition is increased, thereby degrading the rolling resistance of the tyre. Therefore, a blending ratio of less than 60 phr or greater than 90 phr is not preferable.

The blending ratio of sulfur is 5 to 6 parts by weight relative to 100 parts by weight of the rubber component. If the blending ratio is less than 5 phr, the adhesion of the rubber composition to steel cord is insufficient, thereby deteriorating the durability of tyres. Furthermore, the loss tangent of the rubber composition is increased, thereby degrading the rolling resistance of the tyre. On the other hand, if the blending ratio is greater than 6 phr, blooming of excessive sulfur occurs, so that the workability of the rubber composition is deteriorated. Therefore, a blending ratio of less than 5 phr or greater than 6 phr is not used.

The blending ratio of the sulfenamide-based vulcanisation accelerator is 1.5 to 3 parts relative to 100 parts of the rubber component. If the blending ratio is less than 1.5 phr, the adhesion of the rubber composition to steel cord is not enough because of insufficient vulcanisation. -If the blending ratio is greater than 3 phr, the elasticity modulus of the rubber composition is so high that the durability of the tyre is deteriorated. Therefore, a blending ratio of less than 1.5 phr or greater than 3 phr is not used.

A modified methylolmelamine resin and a modified resorcinolformaldehyde are added to improve the adhesion of the rubber composition to the steel cord. The modified methylolmelamine resin herein is obtained by way of etherification of a methylolmelamine resin. The monomer unit of the modified methylolmelamine resin is represented by the following formula (1)

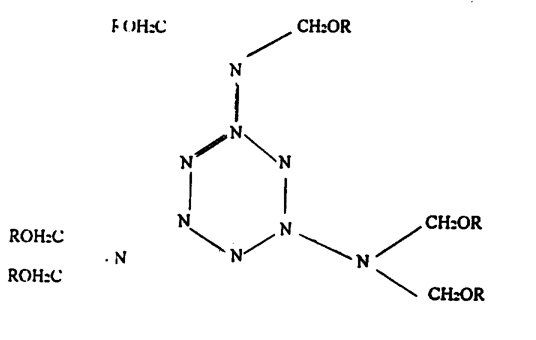

The modified resorcinolformaldehyde is obtained by way of alkylation of a resorcinolformaldehyde, and is represented by the following formula (2):

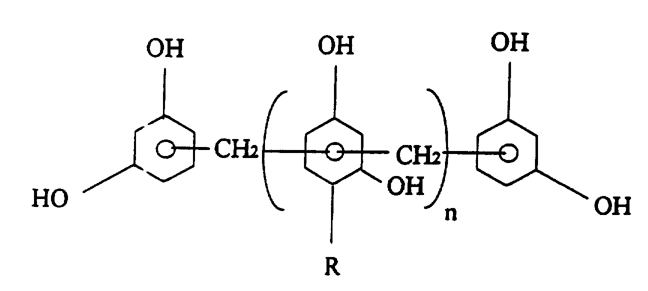

A curing reaction between a methylene group (methylene donor) of the modified methylolmelamine resin and a hydroxyl group (methylene acceptor) of the modified resorcinolformaldehyde contributes to the adhesion of the rubber composition to the steel cord. This adhesive effect increases the complex elasticity modulus of the rubber composition co-operatively with the vulcanisation of the rubber itself, thereby reducing the loss tangent. The ratio of the modified methylolmelamine resin to the modified resorcinolformaldehyde is preferably from 1:1 to 2:1. The blending ratio of each of the resins in the rubber composition is preferably 2 to 5 parts by weight relative to 100 parts of the rubber component. If the blending ratio of each of the resins is greater than 5 phr, the curing rate becomes higher (or scorching time becomes shorter), thereby deteriorating the workability of the rubber composition.

In addition to the aforesaid compounds, additives generally used in the rubber industry may, as required, be added to the rubber composition of the present invention. For example, 0.5 to 5 parts of an organic cobalt salt is preferably blended in the rubber composition. The organic cobalt salt serves to crosslink the rubber component and steel cord increasing the adhesive force between the rubber component and steel cord, thereby contributing to an improvement of the durability of tyres. However, if the amount of organic cobalt salt is excessive, more specifically, the blending ratio thereof is greater than 5 phr, deterioration of the rubber composition due to oxidation occurs. As well as the organic cobalt salt, there may, as required, be added antioxidant, softening agent, zinc white, stearic acid or a like additive.

The foregoing rubber composition, especially, obtained after the vulcanisation preferably has such rubber properties that the complex elasticity modulus is 18.0 to 28.0 MPa and the loss tangent is 0.07 to 0.12. In general, a complex elasticity modulus of less than 18.0 MPa does not ensure sufficient steering stability, and a complex elasticity modulus of greater than 28.0 -MPa is liable to deteriorate the vehicle-riding comfort and to reduce the durability of the tyre. Therefore, a complex elasticity modulus of less than 18.0 MPa or greater than 28.0 MPa is not preferable. On the other hand, a loss tangent of less than 0.07 results in unstable steering performance, while a loss tangent of greater than 0.12 degrades the rolling resistance. Therefore, a loss tangent of less than 0.07 or greater than 0.12 is not preferable.

The rubber composition for steel belt of the aforesaid composition thus described allows the steering stability of a vehicle to be improved without increasing the rolling resistance of a tyre. Therefore, the use of rubber composition for steel belt in accordance with the present invention makes it possible to build tyres that satisfy requirements for the rolling resistance, steering stability and riding comfort.

The rubber composition of the present invention will hereinafter be more specifically described by way of the following specific examples. It should be noted that these examples are not limiting of the present invention.

Rubber compositions in accordance with Example 1 to 4 and Reference Example 1 to 8 were each prepared by blending substances as shown in Table 1 in a blending ratio as shown also in Table 1. Among these rubber compositions, Reference Example 1 is a rubber composition which is now typically used for steel belt.

**Table 1**

| Rubber compositions | Examples | | | | Reference Examples | | | | | | | |
|---|---|---|---|---|---|---|---|---|---|---|---|---|
| | 1 | 2 | 3 | 4 | 1 | 2 | 3 | 4 | 5 | 6 | 7 | 8 |
| Natural rubber | 100 | 100 | 100 | 80 | 100 | 100 | 100 | 100 | 100 | 100 | 100 | 100 |
| Isoprene rubber | - | - | - | 20 | - | - | - | - | - | - | - | - |
| Carbon black A | - | - | - | - | - | - | 80 | - | - | - | - | - |
| Carbon black B | 60 | 60 | 80 | 60 | 60 | 60 | - | - | 80 | 80 | 95 | 50 |
| Carbon black C | - | - | - | - | - | - | - | 80 | - | - | - | - |
| Insoluble sulfur | 6 | 6 | 6 | 6 | 4 | 6 | 6 | 6 | 4 | 7 | 6 | 6 |
| Vulcanisation accelerator | 2.5 | 2.5 | 2.5 | 2.5 | 1 | 2.5 | 2.5 | 2.5 | 1 | 4 | 2.5 | 2.5 |
| Modified methylolmelamine resin | 3 | 5 | 5 | 5 | - | - | 5 | 5 | 5 | 5 | 3 | 3 |
| Modified resorcinolformaldehyde resin | 3 | 3 | 3 | 3 | - | - | 3 | 3 | 3 | 3 | 3 | 3 |
| Cobalt naphtenate | 2 | 2 | 2 | 2 | 2 | 2 | 2 | 2 | 2 | 2 | 2 | 2 |
| Antioxidant | 1 | 1 | 1 | 1 | 1 | 1 | 1 | 1 | 1 | 1 | 1 | 1 |

**Table 2**

| Carbon black | Iodine adsorption | DBP absorption |
|---|---|---|
| (name) | (mg/g) | (ml/100g) |
| A (N219 | 118 | 78 |
| B (N351) | 68 | 120 |
| C (N550) | 43 | 121 |

The properties of the carbon blacks A, B and C shown in Table 1 are shown in Table 2. As can be understood therefrom, the carbon Black B satisfies the requirement of the present invention. Poly(2,2,4-trimethyl-1,2-dihydroquinoline) and N,N-dicyclohexyl-2-benzothiazolylsulfenamide were used as the antioxidant and vulcanising agent, respectively. SUMIKANOL 507 (represented by the formula (3)) and SUMIKANOL 620 (represented by the formula (4)) both available from Sumitomo Chemical Co Limited were used as the modified methylolmelamine resin and modified resorcinolformaldehyde resin, respectively.

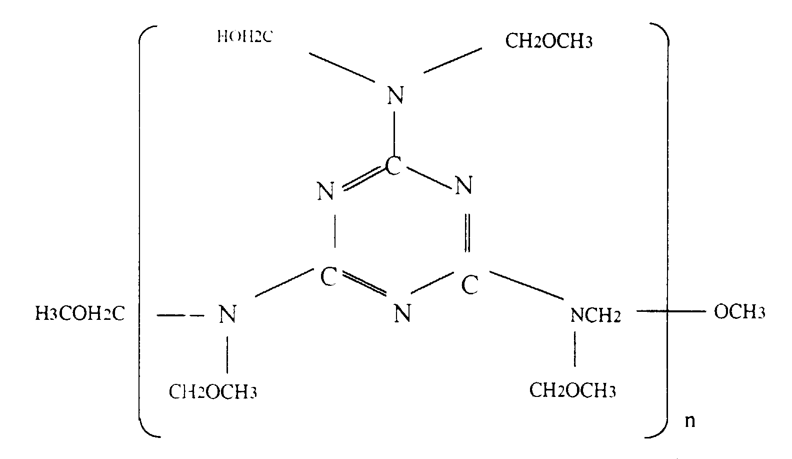

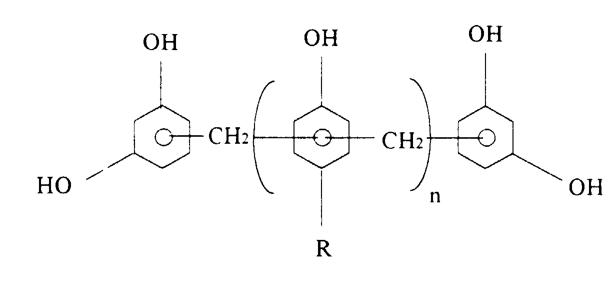

SUMIKANOL 507 is a mixture of a partial condensate of hexamethylolmelamine pentamethyl ether and silica, and the content of silica is 50% by weight.

These rubber compositions were vulcanised under the same conditions to prepare vulcanised rubber test strips. Then, the complex elasticity moduli (E*) and loss tangents (tanδ) of the respective vulcanised rubber test strips were measured by means of a viscoelasticity spectrometer (Iwamoto Seisakusho Co) with a frequency of 10 Hz and a dynamic strain of 2% at a temperature of 70°C.

In turn, tyres (185/65R14) were built using the aforesaid respective rubber compositions as the topping or coating rubber for the steel belt. Each set of tyres were fitted in turn to a vehicle (FR car made in Japan), and then the ride comfort, steering stability during lane changing of the vehicle and rolling resistance were measured. The measured results are shown in Table 3. The ride comfort and steering stability were determined by sensory evaluation using a ten-level ration (1 to 10), and ratings of not lower than 6 were regarded as passing the test. The rolling resistance was represented by an index calculated with the rolling resistance of Reference Example 1 being 100. A smaller index means a smaller rolling resistance, and is considered to be more preferable.

**Table 3**

| Rubber compositions | | Examples | | |
|---|---|---|---|---|
| | 1 | 2 | 3 | 4 |
| Viscoelasticity | | | | |
| E* | 22.5 | 24.5 | 27.0 | 24.0 |
| tanδ | 0.08 | 0.08 | 0.11 | 0.08 |

| Tyre performance | | | | |
|---|---|---|---|---|
| Rolling resistance | 100 | 100 | 101 | 100 |
| Steering stabil;ty | 6 | 6 | 7 | 6 |
| Riding comfort | 6 | 6 | 6 | 6 |

| Rubber compositions | Reference examples | | | | | | | |
|---|---|---|---|---|---|---|---|---|
| | 1 | 2 | 3 | 4 | 5 | 6 | 7 | 8 |
| Viscoelasticity | | | | | | | | |
| E* | 7.8 | 12.4 | 30.7 | 16.5 | 24.5 | 30.0 | 25.4 | 16.0 |
| tanδ | 0.13 | 0.07 | 0.16 | 0.09 | 0.20 | 0.09 | 0.20 | 0.06 |

| Tyre performance | | | | | | | | |
|---|---|---|---|---|---|---|---|---|
| Rolling resistance | 100 | 98 | 105 | 100 | 105 | 102 | 106 | 98 |
| Steering stability | 5 | 5 | 7 | 5 | 7 | 6 | 7 | 5 |
| Riding comfort | 7 | 7 | 5 | 6 | 6 | 5 | 4 | 6 |

As can be understood from Table 3, where the complex elasticity modulus is 18.0 or less or where the loss tangent is 0.7 or less, the steering stability is insufficient. On the other hand, where the complex elasticity modulus is 28.0 or greater or where the loss tangent is 0.12 or greater, the rolling resistance is undesirably high and the riding comfort is degraded.

As can be understood from the comparison between Examples 2 and 4 and Reference Examples 3 and 4 shown in Table 3, the complex elasticity modulus E* and loss tangent tanδ can be maintained in a desired range by blending the carbon black B having an iodine adsorption of 40 to 100 mg/g in the rubber composition, and thus the requirements for steering stability, rolling resistance and riding comfort can be satisfied. An excessively high blending ratio of the carbon black B results in a high loss tangent tanδ and a high rolling resistance, thereby deteriorating the riding comfort (see examples 1 to 4 and reference example 7). An excessive low blending ratio of the carbon black B results in a low complex elasticity modulus E* and an excessively low rolling resistance, thereby deteriorating the steering stability (see examples 1 to 4 and reference example 8).

As can be understood from the comparison between Example 3 and Reference Example 5, where the contents of both sulfur and sulfenamide-based vulcanisation accelerator are small, the vulcanisation of the rubber composition is insufficient, and results in the likelihood of increased loss tangent tanδ and rolling resistance.

Further, as can be appreciated from the comparison between Examples 1, 2 and 4 and Reference Example 2, the complex elasticity modulus E* and loss tangent tanδ can be improved by blending the modified methylolmelamine resin and modified resorcinolformaldehyde in respective predetermined amounts in the rubber composition.

## Claims

1. A rubber composition for a steel belt for a tyre, comprising 100 parts by weight of a diene rubber containing at least either one of natural rubber and polyisoprene as a main component thereof; 60 to 90 parts by weight of a carbon black having an iodine adsorption of 50 to 100 mg/g and a dibutylphthalate absorption of 100 to 160 ml/100g; 5 to 6 parts by weight of sulfur; 1.5 to 3 parts by weight of a sulfenamide-based vulcanisation accelerator; 2 to 5 parts by weight of a modified methylolmelamine resin; and 2 to 5 parts by weight of a modified resorcinolformaldehyde.

2. A rubber composition for a steel belt as set forth in claim 1, characterised in that the blending ratio of said modified methylolmelamine resin to said modified resorcinolformaldehyde resin is 1:1 to 2:1.

3. A rubber composition for a steel belt as set forth in claim 1 or 2, characterised by 0.5 to 5 parts by weight of an organic cobalt salt.

4. A rubber composition for a steel belt as set forth in any claims 1 to 3, characterised in that the rubber composition after vulcanisation has a complex elasticity modulus of 18.0 to 28.0 MPa and a loss tangent of 0.07 to 0.12.

5. A rubber composition for a steel belt as set forth in any of claims 1 to 4, characterised in that the blending ratio of said modified methylolmelamine resin to said modified resorcinolformaldehyde resin is 1:1 to 2:1.

6. A rubber composition for a steel belt as set forth in any of claims 1 to 5, characterised by 0.5 to 5 parts by weight of an organic cobalt salt.

7. A tyre comprising a rubber composition as recited in claims 1 to 6, which is disposed around a steel belt and vulcanised.

## Patentansprüche

1. Kautschukzusammensetzung für einen Stahlgürtel für einen Reifen, umfassend: 100 Gewichtsteile eines Dienkautschukes, der zumindest eines von Naturkautschuk und Polyisopren als dessen Hauptbestandteil enthält; 60 bis 90 Gewichtsteile eines Russes, der eine Jodadsorption von 50 bis 100 mg/g und eine Dibutylphthalatabsorption von 100 bis 160ml/100g aufweist; 5 bis 6 Gewichtsteile Schwefel; 1, 5 bis 3 Gewichtsteile eines Vulkanisierungsbeschleunigers auf Sulfenamidbasis; 2 bis 5 Gewichtsteile eines modifizierten Methylolmelaminharzes; und 2 bis 5 Gewichtsteile eines modifizierten Resorcinformaldehyds.

2. Kautschukzusammensetzung für einen Stahlgürtel nach Anspruch 1, dadurch gekennzeichnet, daß das Mischungsverhältnis des modifizierten Methylolmelaminharzes zu dem modifizierten Resorcinformaldehydharz 1:1 bis 2:1 beträgt.

3. Kautschukzusammensetzung für einen Stahlgürtel nach Anspruch 1 oder 2, gekennzeichnet durch 0,5 bis 5 Gewichtsteile eines organischen Kobaltsalzes.

4. Kautschukzusammensetzung für einen Stahlgürtel nach einem der Ansprüche 1 bis 3, dadurch gekennzeichnet, daß die Kautschukzusammensetzung nach der Vulkanisierung einen komplexen Elastizitätsmodul von 18,0 bis 28,0 MPa und ein Verlusttangens von 0,07 bis 0,12 aufweist.

5. Kautschukzusammensetzung für einen Stahlgürtel nach einem der Ansprüche 1 bis 4, dadurch kennzeichnet, daß das Mischungsverhältnis des modifizierten Methylolmelaminharzes zu dem modifizierten Resorcinformaldehydharz 1:1 bis 2:1 beträgt.

6. Kautschukzusammensetzung für einen Stahlgürtel nach einem der Ansprüche 1 bis 5, gekennzeichnet durch 0,5 bis 5 Gewichtsteile eines organischen Kobaltsalzes.

7. Reifen, der eine Kautschukzusammensetzung nach einem der Ansprüche 1 bis 6 umfaßt, die um einen Stahlgürtel herum angeordnet und vulkanisiert ist.

## Revendications

1. Composition de caoutchouc destinée à une ceinture d'acier de pneumatique, contenant 100 parties en poids d'un caoutchouc de diène contenant au moins soit un caoutchouc naturel soit un polyisoprène comme ingrédient principal, 60 à 90 parties en poids de noir de carbone ayant un indice d'adsorption d'iode compris entre 50 et 100 mg/g et un indice d'absorption de dibutylphtalate compris entre 100 et 160 cm³/100 g, 5 à 6 parties en poids de soufre, 1,5 à 3 parties en poids d'un accélérateur de vulcanisation à base de sulfénamide, 2 à 5 parties en poids d'une résine de méthylolmélamine modifiée, et 2 à 5 parties en poids de résorcinolformaldéhyde modifié.

2. Composition de caoutchouc pour ceinture d'acier selon la revendication 1, caractérisée en ce que le rapport de mélange de la résine de méthylolmélamine modifiée à la résine de résorcinolformaldéhyde modifiée est compris entre 1,1 et 2/1.

3. Composition de caoutchouc pour ceinture d'acier selon la revendication 1 ou 2, caractérisée par 0,5 à 5 parties en poids d'un sel organique du cobalt.

4. Composition de caoutchouc pour ceinture d'acier selon l'une quelconque des revendications 1 à 3, caractérisée en ce que la composition de caoutchouc après vulcanisation a un module complexe d'élasticité de 18,0 à 28,0 MPa et une tangente à l'angle de pertes de 0,07 à 0,12.

5. Composition de caoutchouc pour ceinture d'acier selon l'une quelconque des revendications 1 à 4, caractérisée en ce que le rapport de mélange de la résine de méthylolmélamine modifiée à la résine de résorcinolformaldéhyde modifiée est compris entre 1/1 et 2/1.

6. Composition de caoutchouc pour ceinture d'acier selon l'une quelconque des revendications 1 à 5, caractérisée par 0,5 à 5 parties en poids d'un sel organique de cobalt.

7. Pneumatique contenant une composition de caoutchouc selon l'une quelconque des revendications 1 à 6, disposée autour d'une ceinture d'acier et vulcanisée.
